# EUROPEAN PATENT APPLICATION

(11) **EP 2 631 534 A2**
(43) Date of publication of application: **28.08.2013**
(21) Application number: 12196242.7
(22) Date of filing: 10.12.2012
(51) Int. Cl.: F21S 8/10, F21S 8/12, F21V 14/02, F21V 7/00

(54) **Automotive headlamp having a movable light source for creating different beams**

(30) Priority: 22.02.2012 US 201213402453
(71) Applicant: OSRAM SYLVANIA INC., Danvers, MA 01923 (US)
(72) Inventor: Boyd, Ronald, Chichester, NH New Hampshire 03258 (US); Eng, Howard B., Hancock, NH New Hampshire 03449 (US); Rice, Lawrence, Hillsboro, NH New Hampshire 03244 (US); Tessnow, Thomas, Weare, NH New Hampshire 03281 (US)
(74) Representative: Viering, Jentschura & Partner

(57) **Abstract**

An automotive headlamp **(12)** having a light engine **(20)** including a solid-state light source **(32)** emitting visible light and a reflector **(26)** configured to receive and reflect light emitted by the solid-state light source **(32).** The automotive headlamp **(12)** further includes an adjustment unit **(22)** having a displacement member **(40)** coupled to the solid-state light source **(32)** and adapted to displace the solid-state light source **(32)** relative to the reflector **(26)** between a first position, wherein the headlamp **(12)** projects a low-beam pattern, and a second position, wherein the headlamp **(12)** projects a high-beam pattern.

## Description

### CROSS REFERENCE TO RELATED APPLICATIONS

N/A

### TECHNICAL FIELD

The present disclosure relates to lighting systems, and, more particularly, to a bi-functional automotive headlamp having a beam changing assembly.

### BACKGROUND

Lighting systems are well-known and are used in a wide variety of applications, including automotive applications. Generally, an automotive headlamp, for example, includes a light source and optical components, such as lenses and reflectors to collect and shape light emitted by the light source and to project the resulting beam pattern forward of the vehicle in a light distinct pattern. It may be preferred that a single automotive headlamp system be capable of projecting more than one beam pattern (i.e. a bi-functional headlamp). For example, a headlamp may emit light in a low-beam mode in which light is generally emitted below the horizon. The headlamp may also emit light in a high beam mode in which light is generally emitted above and below the horizon.

Some bi-functional headlamp systems include multiple light sources for the low and high beam modes. For example, some filament headlamp systems include multiple filaments: one filament for the low beam function, and another filament for the high beam function. Similarly, some light emitting diode (LED) headlamp systems include multiple strings of LED modules or chips; one string of LEDs for the low beam function, and another string ofLEDs for the high beam function. Some headlamp systems further include a mechanism for adjusting the light sources and/or other components of the headlamp, such as the reflector, to produce the low beam and high beam functions. Additionally, some bi-functional headlamp systems utilize a single shutter or light shield to selectively block a portion of the light from a single light source to provide a low beam pattern and, to provide a high beam pattern, the shielded light is added to the beam by retraction of the shield. Examples of such headlamps may be found in U.S. Patent No. 5,567,032 (Heizmann); U.S. Patent No. 5,911,502 (Zillgitt et al.); U.S. Patent No. 5,971,574 (Taniuchi et al.); U.S. Patent No. 6,043,614 (Tessnow et al.); U.S. Patent No. 6,552,493 (Yen); U.S. Patent No. 6,953,274 (Rice); U.S. Patent No. 7,156,544 (Ishida); U.S. Patent No. 7,290,907 (Kovach); U.S. Patent No. 7,837,367 (Huang et al.); U.S. Patent Pub. No. 2002/0039289 (Kinouchi); U.S. Patent Pub. No.2005/0088853 (Yatsuda et al.); U.S. Patent Pub. No. 2008/0055918 (Mascadri); and European Patent No. EP 0982189 (Taniuchi et al.).

One limitation to these types of known bi-functional headlamp systems is the cost associated with having multiple light sources provided in the bi-functional headlamp. In the case of current LED headlamp systems, for example, the large number of required LEDs increases the amount of heat generated, thus necessitating one or more fans, air ducts, and the like to ensure that the operating temperature of the LEDs is maintained within an acceptable range. Consequently, numerous components are necessary which results in a very expensive and complex headlamp which requires tight manufacturing tolerances to properly aim the multiple, discrete light sources.

### BRIEF DESCRIPTION OF THE DRAWINGS

Reference should be made to the following detailed description which should be read in conjunction with the following figures, wherein like numerals represent like parts:

**FIG. 1** illustrates a block diagram of one embodiment of a lighting system consistent with the present disclosure;

**FIG. 2** illustrates a perspective view of a light module of the lighting system of **FIG. 1** consistent with the present disclosure;

**FIG. 3** illustrates a front view of a portion of one embodiment of a light module of the lighting system of **FIG. 1** consistent with the present disclosure;

**FIG. 4A** illustrates a side cross-sectional view of the light module of **FIG. 3** in a low beam mode;

**FIG. 4B** illustrates a perspective view of the light module of **FIG. 3** in a low beam mode;

**FIG. 5A** illustrates a side cross-sectional view of the light module of **FIG. 3** in a high beam mode;

**FIG. 5B** illustrates a perspective view of the light module of **FIG. 3** in a high beam mode;

**FIG. 6** illustrates a front view of a portion of another embodiment of a light module of the lighting system of **FIG. 1** consistent with the present disclosure;

**FIG. 7A** illustrates a top cross-sectional view of the light module of **FIG. 6** in a low beam mode;

**FIG. 7B** illustrates a perspective view of the light module of **FIG. 6** in a low beam mode;

**FIG. 8A** illustrates a top cross-sectional view of the light module of **FIG**. **6** in a high beam mode;

**FIG. 8B** illustrates a perspective view of the light module of **FIG. 6** in a high beam mode;

**FIG. 9A** illustrates a front view of a portion of another embodiment of a light module of the lighting system of **FIG. 1** in a low beam mode;

**FIG. 9B** illustrates a side cross-sectional view of the light module of **FIG**. **9A** in a low beam mode;

**FIG. 10A** illustrates a front view of a portion of the light module of **FIG. 9A** in a high beam mode; and

**FIG. 10B** illustrates a side cross-sectional view of the light module of **FIG. 9A** in a high beam mode.

For a thorough understanding of the present disclosure, reference should be made to the following detailed description, including the appended claims, in connection with the above-described drawings. Although the present disclosure is described in connection with exemplary embodiments, the disclosure is not intended to be limited to the specific forms set forth herein. It is understood that various omissions and substitutions of equivalents are contemplated as circumstances may suggest or render expedient. Also, it should be understood that the phraseology and terminology used herein is for the purpose of description and should not be regarded as limiting.

### DETAILED DESCRIPTION

By way of an overview, one aspect consistent with the present disclosure may feature a vehicle lighting system including a bi-functional headlamp. The headlamp includes a single light engine including a solid-state light source (i.e. a single string of one or more LEDs) emitting visible light and a reflector configured to receive and reflect light emitted by the solid-state light source. The headlamp further includes an adjustment unit having a displacement member coupled to the solid-state light source. The adjustment unit is adapted to displace the solid-state light source relative to the reflector between a first position, wherein the light from the solid-state light source is directed towards a first portion of the reflector, and a second position, wherein the light from the solid-state light source is directed towards a second portion of the reflector. When the solid-state light source is in the first position, the headlamp functions in a first lighting mode, such as low beam mode, in which light is generally emitted below or at and below a horizontal plane. When the solid-state light source is in the second position, the headlamp functions in a second lighting mode, such as high-beam mode, in which light is generally emitted both above and below the horizontal plane. When the light is directed below or at and below the horizontal plane, it is generally emitted in a direction directed below or at and below the horizon, which is a virtual plane located far ahead of the vehicle.

A headlamp consistent with the present disclosure includes a single light engine including a solid-state light source, such as a single string of one or more LEDs. The single string of LEDs is adapted to move between a first position to provide a low-beam light pattern and a second position to provide a high-beam light pattern from the headlamp. As such, a headlamp consistent with the present disclosure is configured to provide both low and high beam modes from a single string of LEDs, as opposed to multiple strings of LEDs, thereby reducing costs. In a string of multiple LEDs, the LEDs illuminate together.

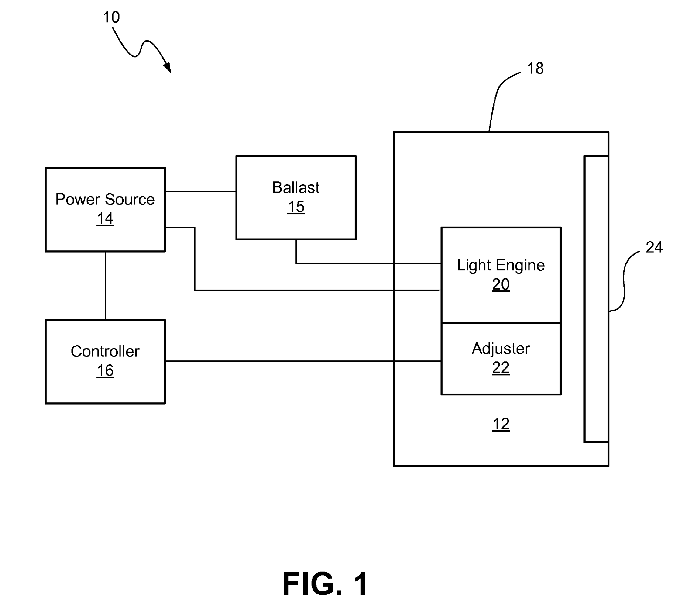

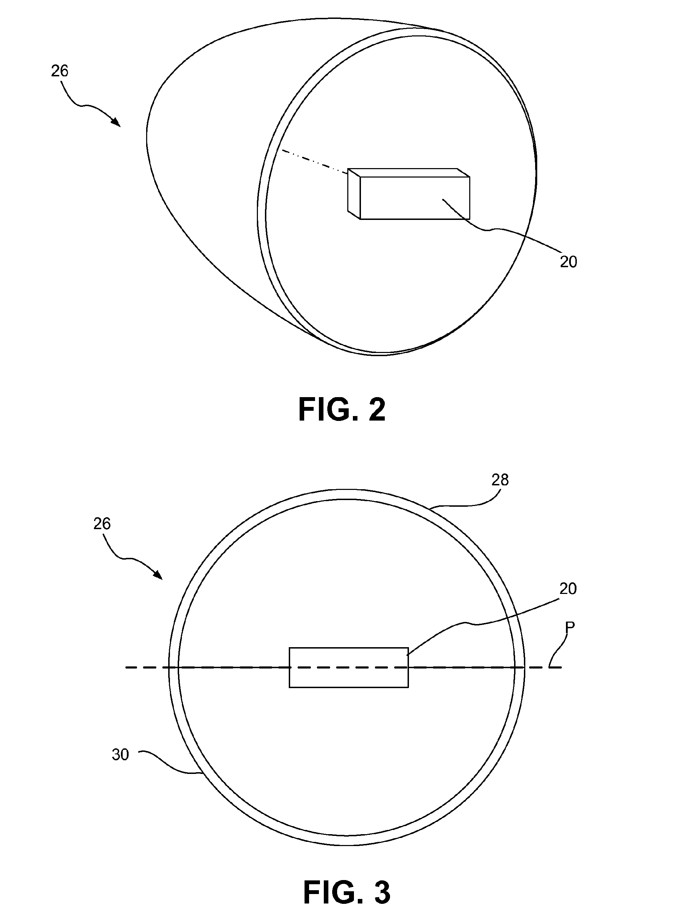

Turning now to **FIG. 1****,** one embodiment of a lighting system **10** consistent with the present disclosure is generally illustrated. The lighting system **10** includes a light module **12,** a power source **14,** and a controller **16.** In the illustrated embodiments described herein, the light module **12** includes an automotive headlamp or headlight. As such, the light module **12** is hereinafter referred to as "headlamp **12".** The headlamp **12** includes a housing **18,** a single light engine **20,** an adjustment unit **22** coupled to the light engine **18,** and a reflector **26** (shown in **FIG. 2****).** The housing **18** is configured to receive at least a portion of the light engine **20** and/or adjustment unit **22.** The housing **18** may also include one or more outer lenses **24** as described in greater detail herein.

The headlamp **12** receives an electrical input from the power source **14,** for example, to energize the light engine **20** and/or the adjustment unit **22.** The power source **14** comprises a DC and/or AC power source, and may include one or more inverters, converters, and/or power conditioners. Optionally, one or more ballast circuits **15** receive an electrical input from the power source **14** and convert it to a stable output for driving the headlamp **12.** One or more of the ballast circuits **15** may be positioned remotely from the headlamp **12** or may be integral with or coupled directed to the housing **18** of the headlamp **12.** The controller **16** transmits one or more signals to control the operation of the lighting system **10.** For example, the controller **16** transmits a signal to the power source **14** in order to selectively energize the light engine **20.** The controller **16** also transmits a signal to the adjustment unit **22** to selectively control the position of the light engine **20** as described in greater detail herein. The controller **16** receives an input signal generated under the control of a user and/or generated from one or more sensors such as, but not limited to, an ambient light sensor or the like (not shown) and/or from another computer system, such as, but not limited to, a vehicle electronic control system (ECU).

Turning now to **FIG. 2****,** a perspective view of a reflector **26** of a headlamp **12** is generally illustrated (the housing **18,** adjustment unit **22,** and outer lens **24** are not shown for purposes of clarity). The reflector **26** is configured to receive at least a portion of the light engine **20** and adjustment unit **22.** As will be described in greater detail herein, the reflector **26** is configured to reflect light emitted by the light engine **20.** As shown, the reflector **26** has a generally parabolic shape. It should be noted that the reflector **26** may include a variety of shapes and/or dimensions depending on desired light distribution.

Referring to **FIG. 3****,** a front view of a portion of one embodiment of a headlamp consistent with the present disclosure is generally illustrated. As shown, the headlamp **12** includes a reflector **26,** wherein the reflector **26** includes a first portion **28** and a second portion **30,** wherein the first and second portions **28, 30** are separated from one another by a dividing plane **P,** wherein the dividing plane **P** divides the reflector **26** into the first portion **28** and the second portion **30.** The first and second portions **28, 30** are configured to reflect light emitted by the light engine **20** such that the headlamp **12** projects a low-beam pattern based on light reflected from one of the first and second portions **28, 30** and projects a high-beam pattern based on light reflected from the other of the first and second portions **28, 30.** This will be described in greater detail herein.

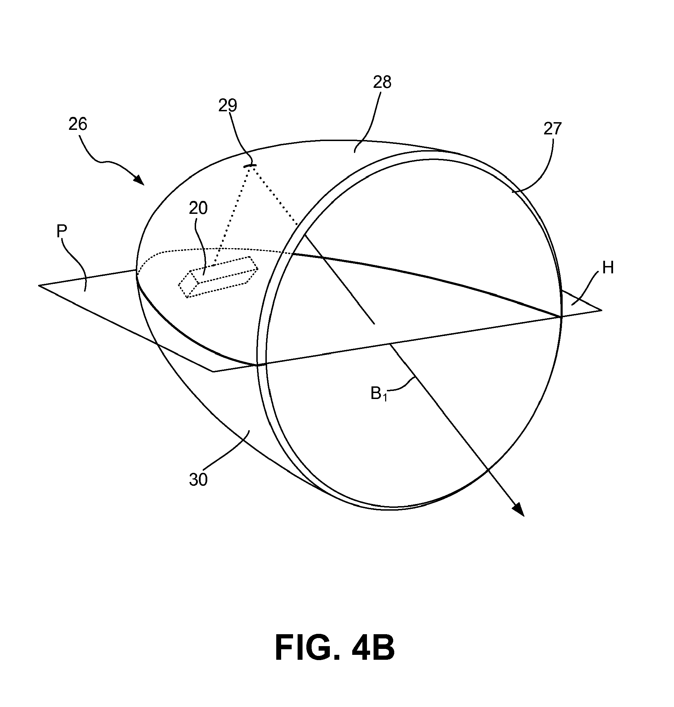

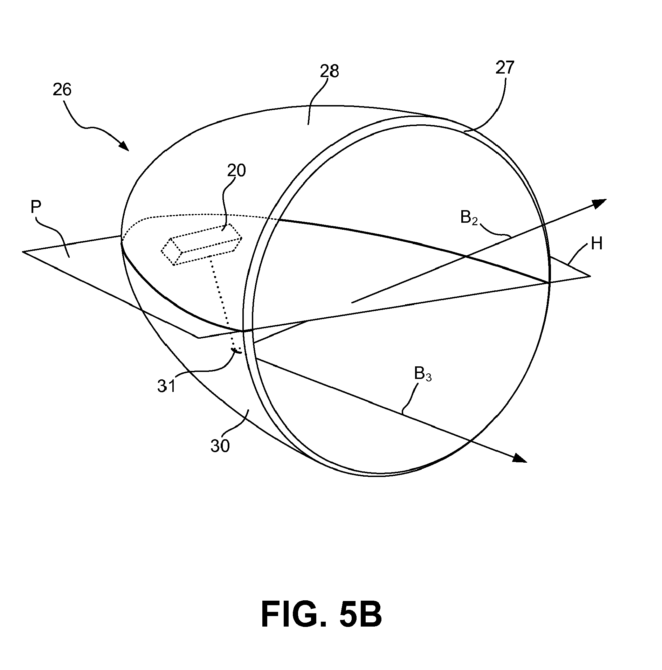

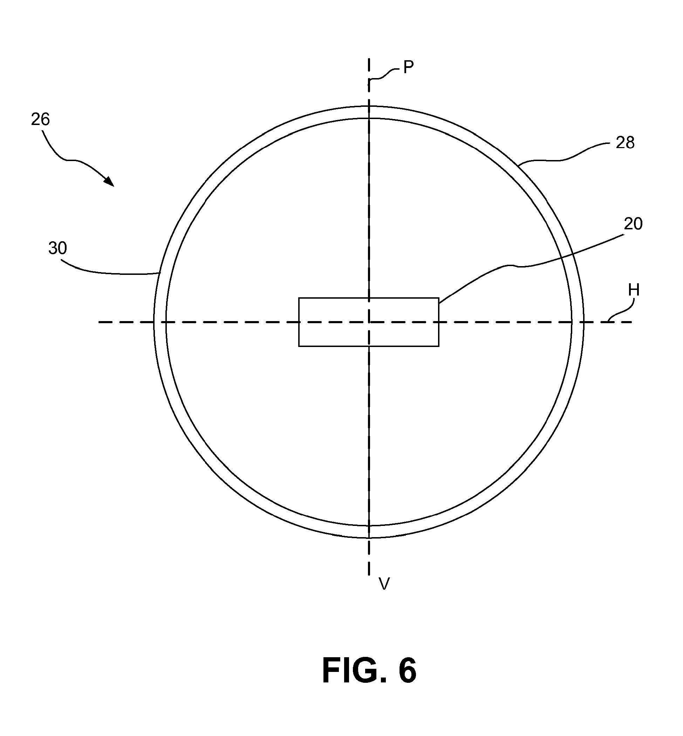

Local laws and regulations governing vehicle standards, such as Federal Motor Vehicle Safety Standards (FMVSS) and Regulations, may include specific regulations regarding the placement of low-beam and high-beam projecting portions of the headlamp. As such, depending on the region-specific laws and regulations, the mounting orientation of the headlamp **12** may vary in order to comply with such laws and regulations. For example, in the illustrated embodiment of **FIGS. 3-5B****,** the headlamp **12** may be mounted in the chassis of a vehicle such that the dividing plane **P** is substantially parallel to a horizontal plane **H** of the vehicle along a length of the vehicle (shown in **FIG. 4B** and **5B****,** dividing plane **P** and horizontal plane **H** share the same plane). The first portion **28** is positioned above the plane **P** and the second portion **30** is positioned below the plane **P.** In the illustrated embodiment of **FIGS. 6-8B****,** the headlamp **12** may be mounted in a different orientation, as described in greater detail herein.

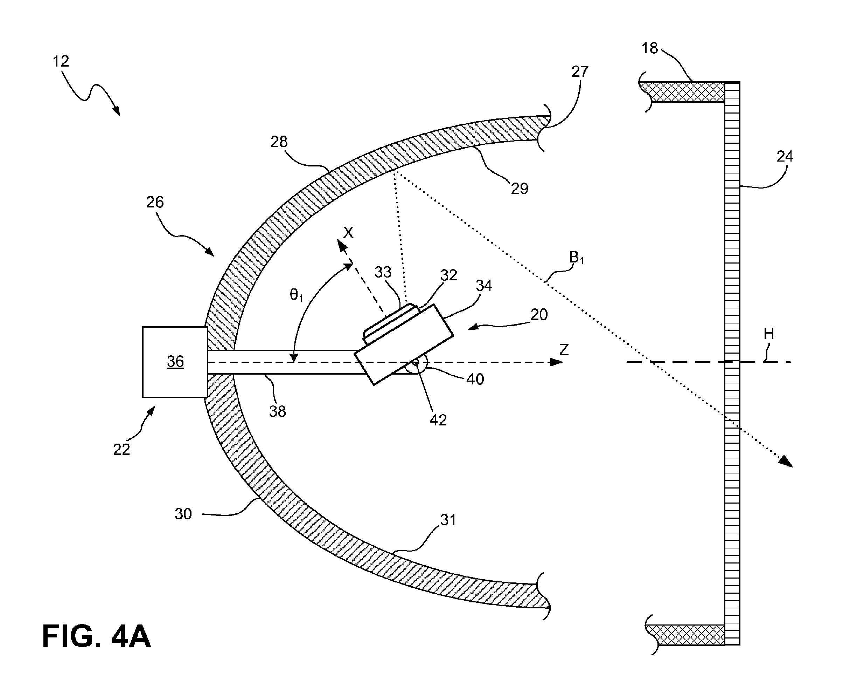

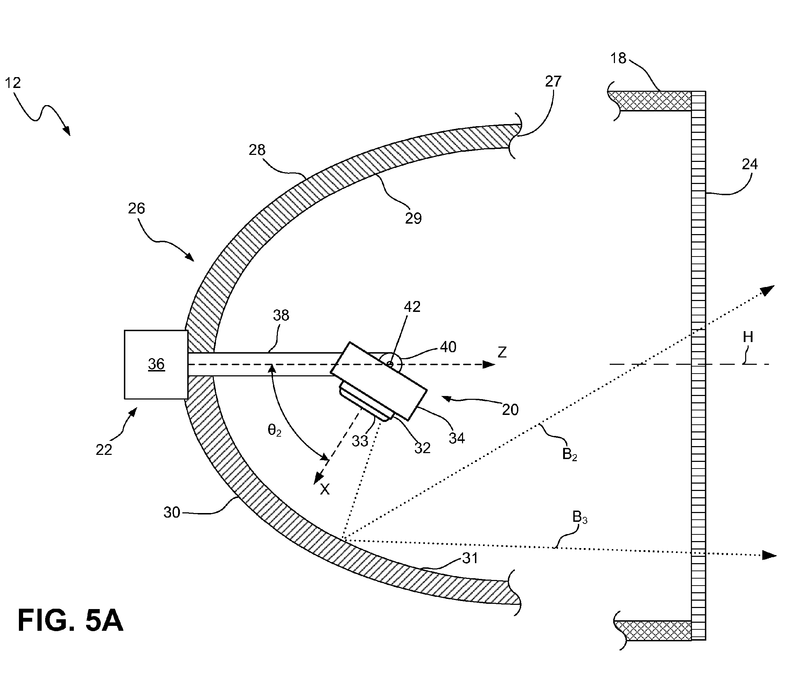

**FIGS. 4A** and **4B** illustrate views of the headlamp **12** in a low beam mode and **FIGS. 5A-5B** illustrate views of the headlamp **12** in a high beam mode. As shown in **FIG. 4A****,** the headlamp **12** includes a housing **18,** a light engine **20,** an adjustment unit **22** coupled to the light engine **18,** and a reflector **26** configured to reflect light emitted by the light engine **20.** The housing **18** is configured to receive at least a portion of the light engine **20,** adjustment unit **22** and reflector **26.** As shown, at least a portion of the light engine **20** and adjustment unit **22** are positioned within the reflector **26.**

In the illustrated embodiment, the light engine **20** includes a solid-state light source **32,** wherein the solid-state light source **32** may include a light emitting diode (LED). While the light engine **20** is illustrated as having a single solid-state light source **32,** such as single LED, the light engine **20** may include multiple solid-state light sources depending on the application. For example, the light engine **20** may include a single string of multiple LEDs. The light engine **20** further includes a carrier **34** upon which the solid-state light source **32** may be positioned.

The single light engine **20** is adapted to provide a desired distribution pattern (i.e. a low beam light and a high beam light). In particular, the light engine **20** is moveable between at least a first position, as generally illustrated in **FIGS. 4A-4B****,** to provide a low beam projection and a second position, as generally illustrated in **FIGS. 5A-5B****,** to provide a high beam projection. While the light engine **20** is shown in two positions, it should be appreciated that the light engine **20** may also be configured to be positioned in other orientations, including, but not limited to, any position intermediate the first and second positions.

In the illustrated embodiment, the light engine **20** is coupled to the adjustment unit **22.** As shown, the adjustment unit includes a support member **38** that retains the light engine **20** within the reflector **26.** The adjustment unit **22** is adapted to move the light engine **20** upon receipt of a signal from the controller **16** as described herein. The adjustment unit **22** may include any device for moving the light engine **20** between the first and second positions. For example, the adjustment unit **22** may include an actuator **36,** such as, for example, a solenoid and/or motor coupled to the light engine **20** through associated gearing, levers, cams, linkages, pivot arms, or the like, for displacing the light engine **20.** For example, in the illustrated embodiment, the adjustment unit **22** includes a displacement member **40** coupled to the light engine **20,** wherein the displacement member **40** is adapted to displace the solid-state light source **32** relative to the reflector **26** between the first position and the second position.

Referring to **FIGS. 4A** and **4B****,** one embodiment of the headlamp **12** is illustrated in the low beam mode. In particular, the controller **16** may transmit one or more signals configured to energize the light engine **20,** and, in turn, the solid-state light source **32,** and emit visible light from an emitting surface **33** of the solid-state light source **32** (e.g., illustrated schematically as light beams **B₁)**. For example, the controller **16** may transmit a signal to the power source **14,** which may in turn provide the necessary electrical input to the light engine **20.** The controller **16** may also transmit one or more signals to the adjustment unit **22** to arrange the light engine **20** and solid-state light source **32** in a first position. As used herein, the phrase "first position" is intended to mean that visible light emitted from the solid-state light source **32** is directed towards the first portion **28** of the reflector **26.**

In response to receipt of one or more signals from the controller **16,** the displacement member **40** of the adjustment unit **22** is adapted to rotate the solid-state light source **32** about an axis **42** between the first and second positions. The axis **42** is substantially perpendicular with an optical axis **Z** of the reflector **26** along the horizontal plane **H.** When the solid-state light source **32** is in the first position, an optical axis **X** of the solid-state light source **32** is oriented at an angle θ**₁** between 0 and 90 degrees relative to the optical axis **Z** of the reflector **26.** In one embodiment, the optical axis **X** of the solid-state light source **32** is oriented at an angle **θ₁** between approximately 30 and 70 degrees relative to the optical axis **Z** of the reflector **26.**

When the solid-state light source **32** is oriented in the first position, the first portion **28** of the reflector **26** is configured to receive visible light (e.g. **B₁**) emitted from the solid-state light source **32.** An interior surface **29** of the first portion **28** is configured to redirect visible light from the solid-state light source **32** toward an open end **27** of the reflector **26,** and not towards the second portion **30,** such that the visible light **B₁** is projected from the headlamp **12** generally below or at and below the horizontal plane **H.** As used herein, the phrase "below the horizontal plane **H"** means the visible light emitted from the headlamp **12** is emitted generally downwardly from the headlamp **12** and towards the ground and the phrase "at and below the horizontal plane **H"** means the visible light emitted from the headlamp **12** is emitted generally parallel to ground and/or downwardly from the headlamp **12** and towards the ground, referenced to a condition where the headlamp **12** is mounted in the vehicle.

Referring to **FIGS. 5A** and **5B****,** the headlamp **12** is illustrated in the high beam mode. In particular, in response to receipt of one or more signals from the controller **16,** the displacement member **40** of the adjustment unit **22** is adapted to rotate the solid-state light source **32** about the axis **42** from the first position to the second position. As used herein, the phrase "second position" is intended to mean that visible light emitted from the solid-state light source **32** is directed towards the second portion **30** of the reflector **26.** When the solid-state light source **32** is in the second position, the optical axis **X** of the solid-state light source **32** is oriented at an angle **θ₂** between 0 and 90 degrees relative to the optical axis **Z** of the reflector **26.** In one embodiment, the optical axis **X** of the solid-state light source **32** may be oriented at an angle **θ₂** between approximately 30 and 70 degrees relative to the optical axis **Z** of the reflector **26.** When the solid-state light source **32** is oriented in the second position, the second portion **30** of the reflector **26** is configured to receive visible light (e.g. illustrated schematically as light beams **B₂** and **B₃**) emitted from the solid-state light source **32.**

As shown, an interior surface **31** of the second portion **30** is configured to redirect visible light from the solid-state light source **32** toward the open end **27** of the reflector **26** and not towards the first portion **28,** such that the visible light (e.g. **B₂** and **B₃**) is projected from the headlamp **12** generally above and below the horizontal plane **H.** As used herein, the phrase "above and below the horizontal plane **H"** means the visible emitted from the headlamp **12** is emitted generally downwardly from the headlamp **12** and towards the ground (light beam **B₃**) and generally upwardly from the headlamp **12** and away from the ground (e.g. light beam **B₂**), referenced to a condition where the headlamp **12** is mounted in the vehicle.

Optionally, the headlamp **12** also includes an outer lens **24** coupled to at least a portion of the housing **18.** The outer lens **24** may be provided to increase the aerodynamics of the headlamp **12.** For example, the outer lens **24** may allow the headlamp **12** to aerodynamically blend in with the adjacent portions of the vehicle to reduce aerodynamic drag. The outer lens **24** may also be configured to protect components of the headlamp **12,** including, but not limited to, the light engine **20,** adjustment unit **22,** and reflector **26.** The outer lens **24** may further be configured to emit visible light reflected by the reflector **26** in one or more distribution patterns. For example, the outer lens **24** may be configured to further aid in the distribution of the visible light emitted from the headlamp **12** in either the low beam mode and/or high beam mode.

Referring to **FIG. 6****,** a front view of a portion of another embodiment of a headlamp consistent with the present disclosure is generally illustrated. The headlamp **12** of **FIGS. 6-8B** is similar to the headlamp **12** of **FIGS. 3-5B****,** and like numerals represent like parts. As previously described, depending on region-specific laws and regulations governing vehicle standards, the mounting orientation of the headlamp **12** may vary in order to comply with such laws and regulations. As shown in **FIGS. 6-8B****,** the headlamp **12** may be mounted in the chassis of a vehicle such that the dividing plane **P** is substantially perpendicular to the horizontal plane **H** along the optical axis **Z** of the reflector **26,** wherein the first portion **28** is positioned on one side of the dividing plane **P** and the second portion **30** is positioned on an opposing side of the dividing plane **P.**

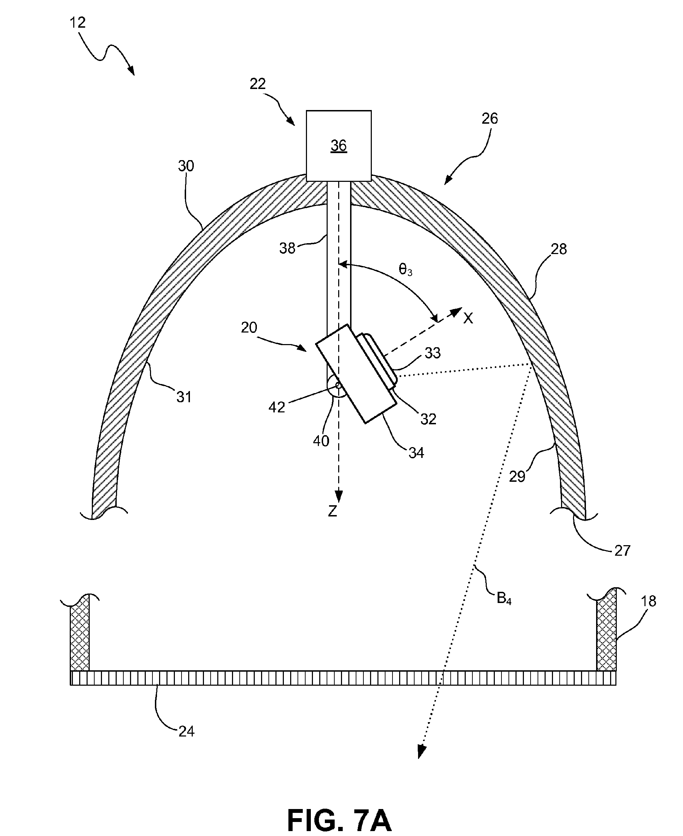

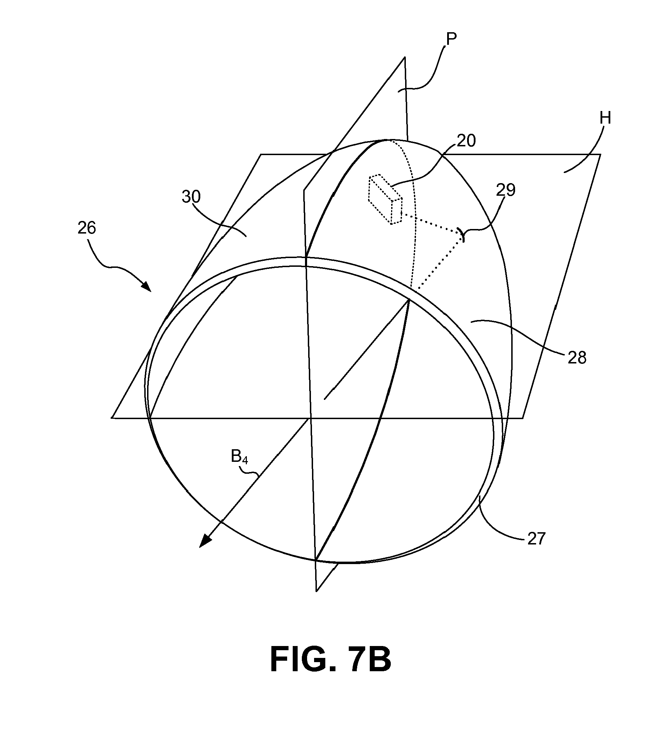

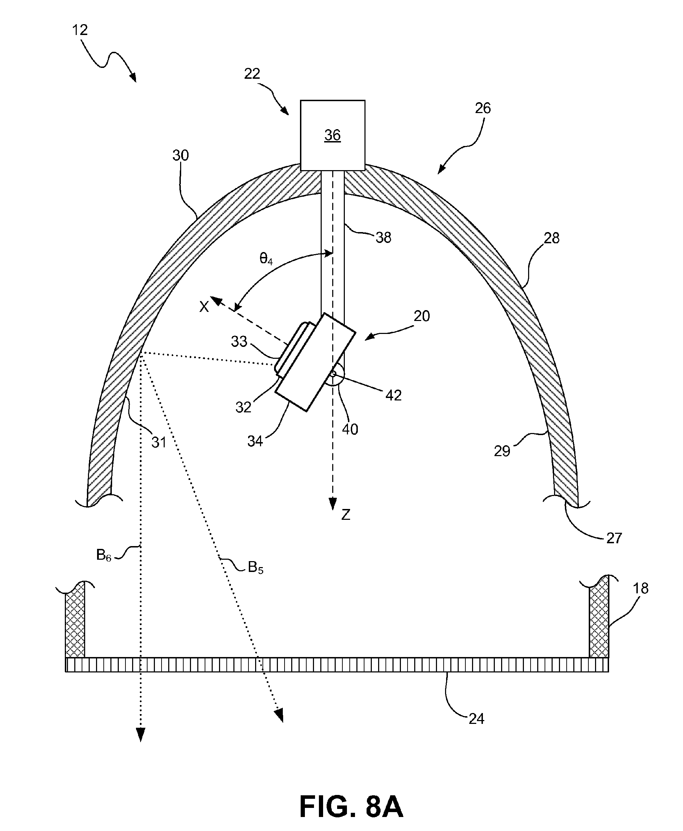

**FIGS. 7A** and **7B** illustrate views of the headlamp **12** in a low beam mode and **FIGS. 8A-8B** illustrate views of the headlamp **12** in a high beam mode. In the illustrated embodiment, the single light engine **20** is adapted to provide a desired distribution pattern, such as a low beam light and a high beam light. In particular, the light engine **20** is moveable between at least a first position as generally illustrated in **FIGS. 7A-7B** to provide a low beam projection and a second position as generally illustrated in **FIGS. 8A-8B** to provide a high beam projection.

Referring to **FIGS. 7A** and **7B****,** one embodiment of the headlamp **12** is illustrated in the low beam mode. As previously described, in response to receipt of one or more signals from the controller **16,** the displacement member **40** of the adjustment unit **22** is adapted to rotate the solid-state light source **32** about an axis **42** between the first and second positions. The axis **42** is substantially perpendicular to an optical axis **Z** of the reflector **26** and the horizontal plane **H** along the dividing plane **P.** When the solid-state light source **32** is in the first position, an optical axis **X** of the solid-state light source **32** is oriented at an angle **θ₃** between 0 and 90 degrees relative to the optical axis **Z** of the reflector **26.** In one embodiment, the optical axis **X** of the solid-state light source **32** may be oriented at an angle **θ₃** between approximately 30 and 70 degrees relative to the optical axis **Z** of the reflector **26.** When the solid-state light source **32** is oriented in the first position, the first portion **28** of the reflector **26** is configured to receive visible light (e.g. **B₄**) emitted from the solid-state light source **32.** As shown, an interior surface **29** of the first portion **28** is configured to redirect the visible light from the solid-state light source **32** toward an open end **27** of the reflector **26** and not towards the second portion **30,** such that the visible light **B₄** is projected from the headlamp **12** generally below or at and below the horizontal plane **H.**

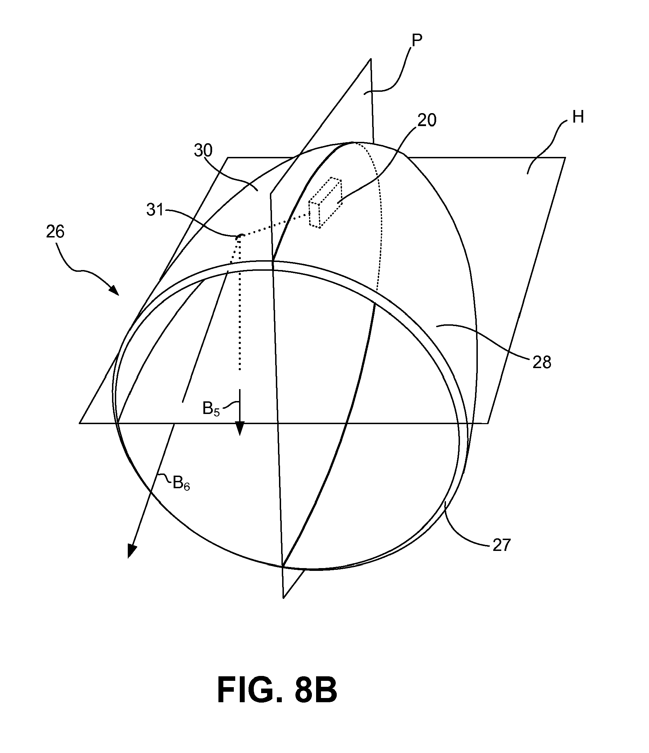

Referring to **FIGS. 8A** and **8B****,** the headlamp **12** is illustrated in the high beam mode. In particular, in response to receipt of one or more signals from the controller **16,** the displacement member **40** of the adjustment unit **22** is adapted to rotate the solid-state light source **32** about the axis **42** from the first position to the second position. When the solid-state light source **32** is in the second position, the optical axis **X** of the solid-state light source **32** is oriented at an angle **θ₄** between 0 and 90 degrees relative to the optical axis **Z** of the reflector **26.** In one embodiment, the optical axis **X** of the solid-state light source **32** may be oriented at an angle **θ₄** between approximately 30 and 70 degrees relative to the optical axis **Z** of the reflector **26.** When the solid-state light source **32** is oriented in the second position, the second portion **30** of the reflector **26** is configured to receive visible light (e.g. illustrated schematically as light beams **B₅** and **B₆**) emitted from the solid-state light source **32.** As shown, an interior surface **31** of the second portion **30** is configured to redirect at least a portion of visible light from the solid-state light source **32** toward the open end **27** of the reflector **26** and not towards the first portion **28,** such that the visible light (e.g. **B₅** and **B₆**) is projected from the headlamp **12** generally above and below the horizontal plane **H.**

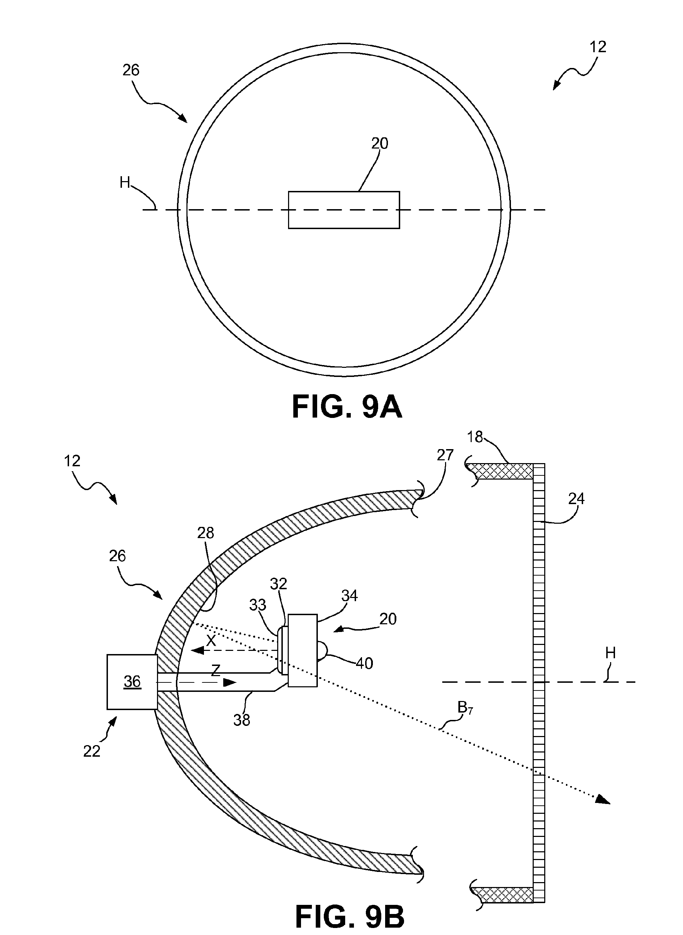

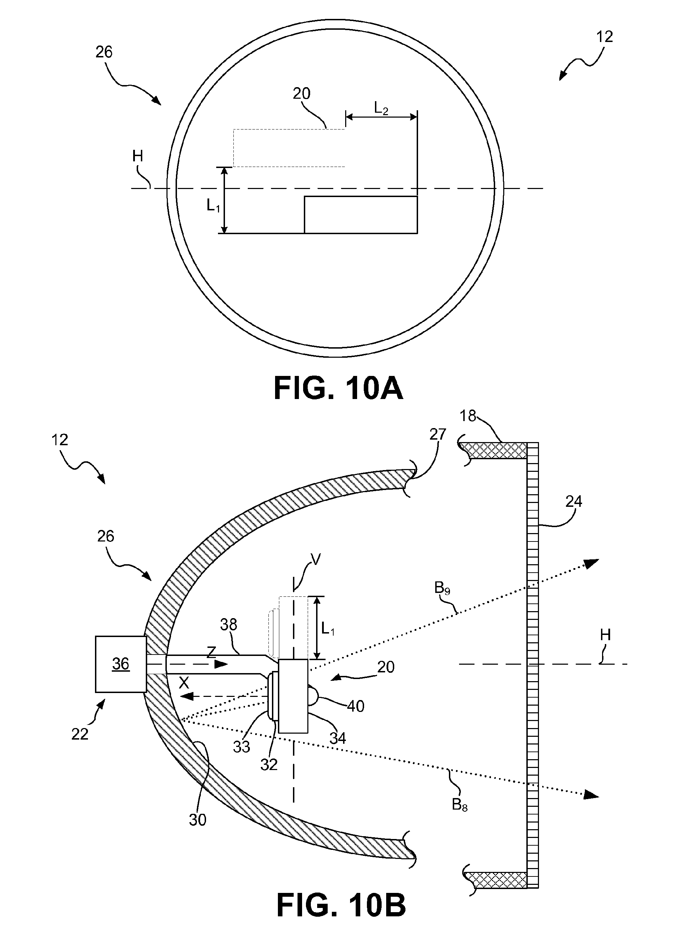

**FIGS. 9A-9B** and **10A-10B** illustrate views of another embodiment of a headlamp in which the light source is displaced in a generally linear fashion. The headlamp **12** of **FIGS. 9A-10B** is similar to the headlamp **12** of **FIGS. 3-5B****,** and like numerals represent like parts. As shown, the headlamp **12** includes a housing **18,** a light engine **20,** an adjustment unit **22** coupled to the light engine **18,** and a reflector **26** configured to reflect light emitted by the light engine **20.** The housing **18** is configured to receive at least a portion of the light engine **20,** adjustment unit **22** and reflector **26.** As shown, at least a portion of the light engine **20** and adjustment unit **22** are positioned within the reflector **26.**

In the illustrated embodiment, the light engine **20** is moveable between at least a first position relative to the reflector **26** to provide a low beam projection, as generally illustrated in **FIGS. 9A-9B****,** and a second position relative to the reflector **26** to provide a high beam projection, as generally illustrated in **FIGS. 10A-10B****.** Similar to the previously described embodiments, the reflector **26** includes a first portion **28** and a second portion **30,** wherein the first and second portions **28, 30** are configured to reflect light emitted by the light engine **20** such that the headlamp **12** projects a low-beam pattern based on light reflected from the first portion **28** and projects a high-beam pattern based on light reflected from the second portion **30.** However, unlike the previously described embodiments, the reflector **26** of **FIGS. 9A-10B** is a single unitary structure.

Referring to **FIGS. 9A** and **9B****,** the headlamp **12** is illustrated in a low beam mode, wherein the light engine **20** is shown in a first position relative to the reflector **26.** Similar to previous embodiments described herein, the light engine **20** includes a solid-state light source **32,** wherein the solid-state light source **32** may include a light emitting diode (LED). When the light engine **20** is in the first position, an optical axis **X** of the solid-state light source **32** is substantially parallel to a horizontal plane **H** and optical axis **Z** of the reflector **26.** When oriented in the first position, visible light (e.g. **B₇)** emitted from the solid-state light source **32** is imparted upon a first portion **28** of the reflector **26.** The first portion **28** of the reflector **26** is configured to redirect the visible light toward an open end **27** of the reflector **26** and not towards the second portion **30,** such that the visible light **B₇** is projected from the headlamp **12** generally below or at and below the horizontal plane **H.**

Referring to **FIGS. 10A** and **10B****,** the headlamp **12** is illustrated in the high beam mode wherein the light engine **20** is shown in a second position relative to the reflector **26.** Similar to previous embodiments described herein, the light engine **20** is coupled to an adjustment unit **22.** The adjustment unit includes a support member **38** that retains the light engine **20** within the reflector **26.** The adjustment unit **22** is adapted to move the light engine **20** from the first position to the second position upon receipt of a signal from the controller **16.** The adjustment unit **22** may include any device for moving the light engine **20** between the first and second positions. For example, the adjustment unit **22** may include an actuator **36,** such as, for example, a solenoid and/or motor coupled to the light engine **20** through associated gearing, levers, cams, linkages, pivot arms, or the like, for displacing the light engine **20.** For example, in the illustrated embodiment, the adjustment unit **22** includes a displacement member **40** coupled to the light engine **20,** wherein the displacement member **40** is adapted to displace the solid-state light source **32** relative to the reflector **26** between the first position and the second position.

In response to receipt of one or more signals from the controller **16,** the displacement member **40** of the adjustment unit **22** is adapted to move the solid-state light source **32** along a vertical plane **V** from the first position (shown in phantom) to the second position. The vertical plane **V** is substantially perpendicular to the horizontal plane **H.** The displacement member **40** is adapted to displace the solid-state light source **32** in both vertical and horizontal directions along the vertical plane **V.** As shown in **FIG. 10A**, for example, the displacement member **40** is adapted to displace the solid-state light source **32** a length **L₁** in a vertical direction and a length **L₂** in a horizontal direction relative to the first position. In one embodiment, the length **L₁** is between approximately 1.1 to 2 millimeters and the length **L₂** is between approximately 0.1 to 5 millimeters.

When the solid-state light source **32** is in the second position, the optical axis **X** of the solid-state light source **32** remains substantially parallel to the horizontal plane **H** and optical axis **Z** of the reflector **26** and visible light (e.g. illustrated schematically as light beams **B₈** and **B₉**) emitted from the solid-state light source **32** is imparted upon a second portion **30** of the reflector **26.** The second portion **30** of the reflector **26** is configured to redirect the visible light toward the open end **27** of the reflector **26** and not towards the first portion **28,** such that the visible light (e.g. **B₈** and **B₉**) is projected from the headlamp **12** generally above and below the horizontal plane **H.**

With regard to the headlamps described herein, the first and second portions **28, 30** of the reflector **26** are configured to receive visible light from the solid-state light source **32** and redirect the visible light to produce a low-beam pattern and a high-beam pattern, respectively. The low and high-beam patterns produced by the first and second portions **28, 30** conform to current U.S. Department of Transportation (DOT) Federal Motor Vehicle Safety Standards (FMVSS) 108 specifications for the low and high-beam output of a vehicle headlamp.

The first portion **28** of the reflector **26** is shaped and/or sized to reflect visible light from the solid-state light source **32** out of the reflector **26** below or at and below the horizontal plane **H** and not towards the second portion **30** when the solid-state light source **32** is in the first position. The second portion **30** is shaped and/or sized to reflect the visible light out of the reflector **26** above and below the horizontal plane **H** and not towards the first portion **28** when the solid-state light source **32** is in the second position. As such, a headlamp consistent with the present disclosure does not require a shield, also known as a "Graves Shield", to aid in production of the low-beam pattern. More specifically, some current headlamps, when in low-beam mode, require a shield to block any stray light that would otherwise strike the high-beam portion of the reflector and be cast (i.e. reflected) above the horizontal plane. Accordingly, a headlamp consistent with the present disclosure requires less components, which may reduce manufacturing costs.

The shapes of the first and second portions **28, 30** may include, but are not limited to, known parabolic, elliptical and sphero-elliptical configurations including those with faceted interior surfaces as well as truncated reflector cups. The phrase "truncated reflector cup" means a portion of a reflector cup, as may be realized, for example, by dividing a reflector cup along a plane intersecting the longitudinal axis (e.g., intersecting a first end and a second end). A truncated reflector may thus be configured as one-half of a reflector cup, but may be more or less than half of a reflector cup. For example, a truncated reflector cup may have a semi-parabaloid or semi-ellipsoid shape.

As generally understood by one of ordinary skill in the art, the first and second portions **28, 30** may include parametric and/or non-parametric surface definition types including, but not limited to, non-uniform rational basis spline (NURBS) curves and/or surfaces configured to reflect the light received from the solid-state light source **32** in the desired pattern (i.e. low-beam and high-beam patterns). Commercially available software including, but not limited to, computer-aided design (CAD), computer-aided manufacturing (CAM), and computer-aided engineering (CAE) software, may be used for the design of NURBS curves and/or surfaces of the first and second portions **28, 30.** For example, a reflector consistent with the present disclosure may be designed using LucidShape computer-aided lighting software offered by Brandenburg GmbH (Paderborn, Germany).

The reflector **26** may be selected to have a high reflectivity. For example, the reflector **26** may have a reflectivity equal to or greater than 85%. According to one embodiment, the reflector **26** may include a metal (such as, but not limited to, aluminum, copper, silver, gold, or the like), metal alloys, plastics (e.g., but not limited to, doped plastics), as well as composites. It should be appreciated that the arrangement, shape and/or contour of the light engine **20,** adjustment unit **22,** and the reflector **26** will depend on the specific application of the headlamp **12** and may include (but is not limited to) such factors as the overall size constraints on the headlamp **12,** desired aesthetic appearance of the headlamp **12,** as well as the desired luminosity of the headlamp **12.**

Accordingly, consistent with one embodiment of the present disclosure, an automotive headlamp **12** is provided. The automotive headlamp **12** includes a light engine **20** including a solid-state light source **32** emitting visible light and a reflector **26** configured to receive and reflect light emitted by the solid-state light source **32.** The automotive headlamp **12** further includes an adjustment unit **22** having a displacement member **40** coupled to the solid-state light source **32** and adapted to displace the solid-state light source **32** relative to the reflector **26** between a first position, wherein the light from the solid-state light source **32** is directed towards a first portion **28** of the reflector **26,** and a second position, wherein the light from the solid-state light source **32** is directed towards a second portion **30** of the reflector **26.** When the solid-state light source **32** is in the first position, the headlamp **12** projects a low-beam pattern based on light reflected by the first portion **28** of the reflector **26.** When the solid-state light source **32** is in the second position, the headlamp **12** projects a high-beam pattern based on light reflected by the second portion **30** of the reflector **26.**

The term "coupled" as used herein refers to any connection, coupling, link or the like by which signals carried by one system element are imparted to the "coupled" element. Such "coupled" devices, or signals and devices, are not necessarily directly connected to one another and may be separated by intermediate components or devices that may manipulate or modify such signals.

While the principles of the present disclosure have been described herein, it is to be understood by those skilled in the art that this description is made only by way of example and not as a limitation as to the scope of the invention. The features and aspects described with reference to particular embodiments disclosed herein are susceptible to combination and/or application with various other embodiments described herein. Such combinations and/or applications of such described features and aspects to such other embodiments are contemplated herein. Other embodiments are contemplated within the scope of the present invention in addition to the exemplary embodiments shown and described herein. Modifications and substitutions by one of ordinary skill in the art are considered to be within the scope of the present invention, which is not to be limited except by the following claims.

The following is a list of reference numeral used in the specification:
- **10**: lighting system
- **12**: light module
- **14**: power source
- **15**: ballast
- **16**: controller
- **18**: housing
- **20**: light engine
- **22**: adjustment unit
- **24**: outer lens
- **26**: reflector
- **27**: open end of reflector
- **28**: first portion of reflector
- **29**: interior surface of first portion of reflector
- **30**: second portion of reflector
- **31**: interior surface of second portion of reflector
- **32**: solid-state light source
- **33**: emitting surface of solid-state light source
- **34**: carrier for solid-state light source
- **36**: actuator
- **38**: support member
- **40**: displacement member
- **42**: axis about which light source rotates
- **θ₁-θ₄**: angles between optical axes of solid-state light source and reflector
- **B₁-B₉**: light beams
- **H**: horizontal plane
- **L₁-L₂**: length of movement of light engine
- **P**: dividing plane
- **V**: vertical plane
- **X**: optical axis of solid-state light source
- **Z**: optical axis of reflector

## Claims

1. An automotive headlamp (12) comprising:
a light engine (20) comprising a solid-state light source (32) emitting visible light;
a reflector (26) configured to receive and reflect light emitted by said solid-state light source (32); and
an adjustment unit (22) having a displacement member (40) coupled to said solid-state light source (32) and adapted to displace said solid-state light source (32) relative to said reflector (26) between a first position, wherein said light from said solid-state light source (32) is directed towards a first portion (28) of said reflector (26), and a second position, wherein said light from said solid-state light source (32) is directed towards a second portion (30) of said reflector (26);
wherein, when said solid-state light source (32) is in said first position, said headlamp (12) projects a low-beam pattern based on light reflected by said first portion (28) of said reflector (26), and when said solid-state light source (32) is in said second position, said headlamp (12) projects a high-beam pattern based on light reflected by said second portion (30) of said reflector (26).

2. The automotive headlamp of claim 1, wherein said solid-state light source (32) comprises at least one light emitting diode (LED) light source.

3. The automotive headlamp of claim 1, wherein said adjustment unit (22) is configured to receive input from a controller (16), whereby said displacement member (40) is adapted to rotate said solid-state light source (32) about an axis (42) between said first position and said second position in response to input from said controller (16).

4. The automotive headlamp of claim 3, wherein said axis (42) is substantially perpendicular to an optical axis (Z) along a dividing plane (P) dividing said reflector (26) into said first portion (28) and said second portion (30).

5. The automotive headlamp of claim 4, wherein an optical axis (X) of said solid-state light source (32) is oriented at an angle θ₁ between 0 and 90 degrees relative to said optical axis (Z) of said reflector (26) when said solid-state light source (32) is in said first position.

6. The automotive headlamp of claim 4, wherein an optical axis (X) of said solid-state light source (32) is oriented at an angle θ₂ between 0 and 90 degrees relative to said optical axis (Z) of said reflector (26) when said solid-state light source (32) is in said second position.

7. The automotive headlamp of claim 1, wherein said adjustment unit (22) is configured to receive input from a controller (16), whereby said displacement member (40) is adapted to translate said solid-state light source (32) between said first position and said second position in response to input from said controller (16).

8. The automotive headlamp of claim 1, wherein said adjustment unit (22) comprises a solenoid actuator.

9. A lighting system (10) comprising the headlamp (12) of claim 1 and further comprising:
a power source (14) for supplying electrical input to said light engine (20) and said adjustment unit (22); and
a controller (16) coupled to said adjustment unit (22) and adapted to selectively energize said adjustment unit (22) to displace said solid-state light source (32) between said first and said second positions.

10. The automotive headlamp of claim 1, wherein said low-beam pattern comprises visible light emitted generally below or at and below a horizontal plane (H) and wherein said high-beam pattern comprises visible light emitted generally above and below said horizontal plane (H).
